# EUROPEAN PATENT APPLICATION

(11) **EP 2 642 635 A2**
(43) Date of publication of application: **25.09.2013**
(21) Application number: 13159875.7
(22) Date of filing: 19.03.2013
(51) Int. Cl.: H02K 1/27, H02K 1/32, H02K 5/128

(54) **Liquid cooled dynamoelectric machine**

(30) Priority: 19.03.2012 US 201213423770
(71) Applicant: Hamilton Sundstrand Corporation, Windsor Locks, CT 06096-1010 (US)
(72) Inventor: Pal, Debabrata, Hoffman Estates, Illinois 60195 (US)
(74) Representative: Bridge, Kerry Ann

(57) **Abstract**

An electric motor includes an outer housing, 215, 420, a stator, 205, 430, disposed within the outer housing and a rotor, 201, 401, disposed within the stator that, in combination with the stator, defines a rotor-stator gap, 202, 450, between them. The rotor includes a main rotor body, 209, and a rotor body extension, 207, 307, extending axially from an end of the main rotor body. The main rotor body includes an axial hole, 340, formed at least partially along a length thereof.

## Description

### BACKGROUND OF THE INVENTION

The present invention is related to dynamoelectric machines and, in particular, to cooling of dynamoelectric machines.

A dynamoelectric machine is any type of machine that can generate motion from electricity or vice-versa and includes, for example, motors and generators. As such, the term "machine" as used herein shall refer to both motors and generators unless specifically limited to the contrary. These machines include both a rotor and a stator separated by a rotor-stator gap. The machine can be cooled by the flow of a liquid coolant flow through the rotor-stator gap. Such a machine is referred to as a liquid cooled machine.

### BRIEF DESCRIPTION OF THE INVENTION

According to one embodiment, an electric motor that includes an outer housing, a stator disposed within the outer housing and a rotor disposed within the stator that, in combination with the stator, defines a rotor-stator gap between them, is disclosed. The rotor of this embodiment includes a main rotor body and a rotor body extension extending axially from an end of the main rotor body. In this embodiment, the main rotor body includes an axial hole formed at least partially along a length thereof.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is cut-away side view of prior art motor coupled to a pump;

FIG. 2 is cut-away side view of a permanent magnet motor according to one embodiment;

FIG. 3 is a cross-section of the rotor of the motor shown in FIG. 2;

FIGs. 4a-4c show a process by which a stator channel may be formed in the rotor shown in FIG. 3;

FIG. 5 is cut-away side view of an induction motor according to another embodiment; and

FIG. 6 is a cross-section of the rotor of the motor shown in FIG. 5.

### DETAILED DESCRIPTION OF THE INVENTION

One environment where liquid cooled machines are utilized is on aircrafts. It has been discovered, however, that in such situations the liquid coolant flow the rotor-stator can result in windage losses. The windage losses results from the friction between the rotor and the coolant. In some cases, the losses can equal up to 70-80% of the machine's electromagnetic heat loss. As a result, and in the event that the machine is a motor, more motor input power is required from the aircraft electrical power system. In addition, increased windage loss results in lower motor efficiency such that motor efficiency is in the 83-85% range. Embodiments of the present invention are directed to liquid cooled machines having reduced windage losses. This can be accomplished, for example, by flowing the liquid coolant through one or more of: an internal portion of the rotor and an external portion of the stator. In one embodiment, no cooling liquid is allowed to pass into the rotor-stator gap. In one embodiment, fluid is only passed through the rotor and the stator is cooled by providing a high conductivity thermal gap pad between an end turn of the stator and the outer housing of the machine.

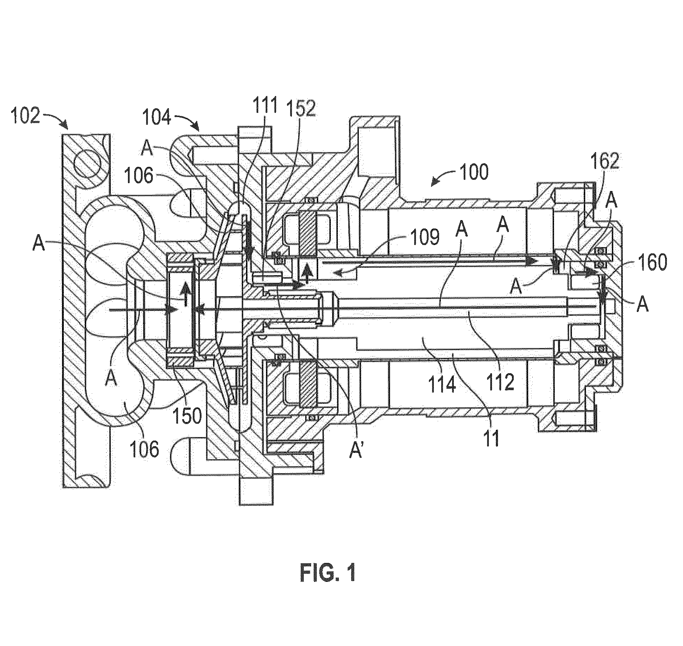

To provide context, a cross-section of a prior art permanent magnet motor 100 is illustrated in FIG. 1. The motor 100 is coupled to a pump component 102 to form a pump 104 used to circulate, for example, a cooling fluid such as a propylene glycol/water mixture through one or more systems of an aircraft. In the illustrated system, the fluid being pumped by the pump 104 is also used to cool the motor 100 as will be described further below.

The cooling fluid is initially drawn into an inlet plenum 108 (not shown) formed in the pump component 102. The fluid is then drawn into a volute 111 formed between the pump component 102 and the motor 100 by the rotation of an impeller 106 and then expelled out of the pump 104 at an outlet (not shown) of the volute 111. However, not all of the fluid is expelled out of the volute 111. In particular, some of the fluid travels into and through the motor 100 and serves to cool it. The path of the fluid is shown by arrows A.

As illustrated, the impeller 106 is directly coupled to the rotor 114 of the motor 100. A thrust bearing 150 is disposed between the impeller 106 and the inlet plenum 108. Fluid that is not expelled from the volute 111 can enter the motor 100 by passing through journal bearing 152 as shown by arrow A'. Thereafter, the fluid enters the interior 109 of the motor 100 and then travels through the rotor-stator gap 110, as described above. The fluid then passes through one or more bearings such as journal bearing 160 and bumper bearing 162 and is drawn back towards the volute 111 through an inner channel 112 of the rotor 114 and provided back into the pump component 102. As described above, having the fluid pass through the rotor-stator gap 110 can result in windage losses.

The following description will assume that the motors disclosed hereafter include are disposed such that a cooling fluid can be provided to them. For instance, the motors could be coupled to a pump portion to form a volute in which an impeller is disposed. The motor turns the impeller to expel a fluid and some of the fluid is drawn into the motor and used to cool the motor.

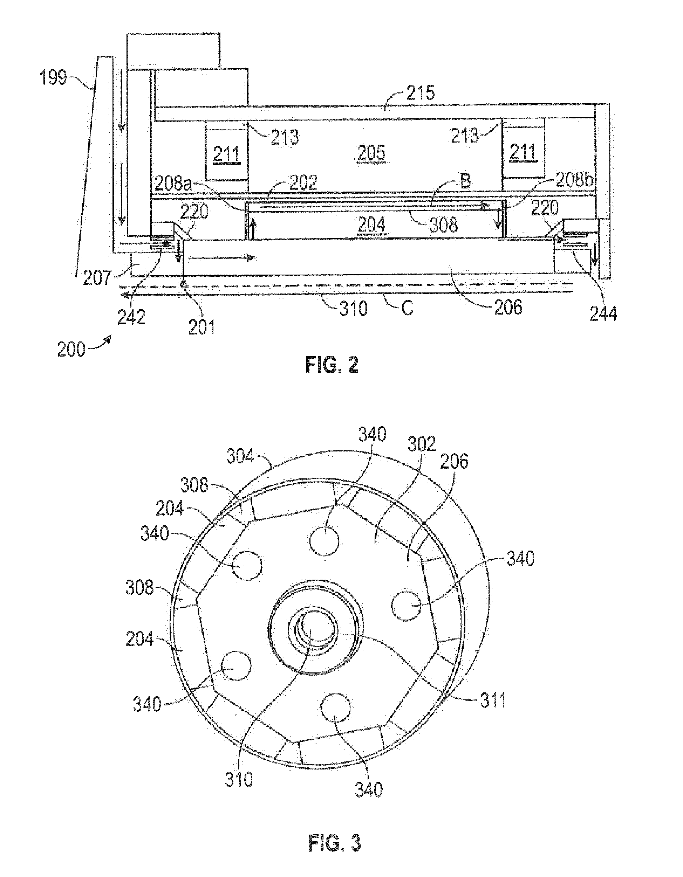

FIG. 2 is a partial cross-section of a motor 200 according to one embodiment. In this embodiment, a cooling fluid is circulated in a manner such that it does not enter the rotor-stator gap 202. As described above, the fluid is driven by an impeller 199 coupled to a rotor 201 of the motor 200. In this embodiment, the motor 200 is a permanent magnet motor and includes a stator 205 surrounding the rotor 201.

The rotor 201 includes one or more permanent magnets 204 disposed about a rotor body 206. The permanent magnets 204 are disposed in a rotor sleeve that includes end plates 208. In the illustrated embodiment, the rotor body 206 includes a rotor body extension 207 that has smaller outer diameter than other portions of the rotor body 206.

Referring now to FIG. 3, cross-section of the rotor 201 is illustrated. The rotor 201 includes a rotor shaft 311 surrounded by a rotor body 206. The rotor shaft 311 defines an inner channel 310 that, as described below, can provide a return fluid path. While not illustrated, it shall be understood that the rotor body extension 207 surrounds portions of the shaft 311.

Arranged about the rotor body 206 are the permanent magnets 204 described above. The permanent magnets 204 are surrounded by a rotor sleeve 304. In one embodiment, the magnets are arranged such that a channel 308 is created between adjacent magnets 204 and the rotor sleeve 304.

As illustrated, the rotor 201 further includes a plurality of axial holes 340 formed in the rotor body 206. These axial holes 340 extend axially along a portion of the rotor 201. In an alternative embodiment, and as disclosed further below, the axial holes 340 could extend along the entire length of the rotor 206. Referring now to both FIGS. 2 and 3, the number of axial holes 340 is variable and form part of a rotor body channel that allows the fluid to enter the channel 308 without entering the gap 202.

In FIG. 2, the cross-section is taken such that the channel 308 is visible. In the illustrated embodiment, rather than being drawn through the rotor-stator gap 110 (FIG. 1), cooling fluid is drawn through the channel 308 as indicated by arrow B and then provided through the inner channel 310 of the rotor 200 as indicated by arrow C.

In FIG. 2 it can be seen that seals 220 are provided that prevent fluid from entering the gap 202. In one embodiment, and referring now to both FIGs. 2 and 3, the seals 220 are provided such that the passes through the journal bearing 242 and is directed towards the rotor holes 340 by the seals 220. In FIG. 2 the rotor holes 340 are not visible indicating that they are not in the same axial plane is the channel 308 in one embodiment. Of course, in one embodiment, one or more of the channels 308 could be in the same axial plane as one of the rotor holes 340.

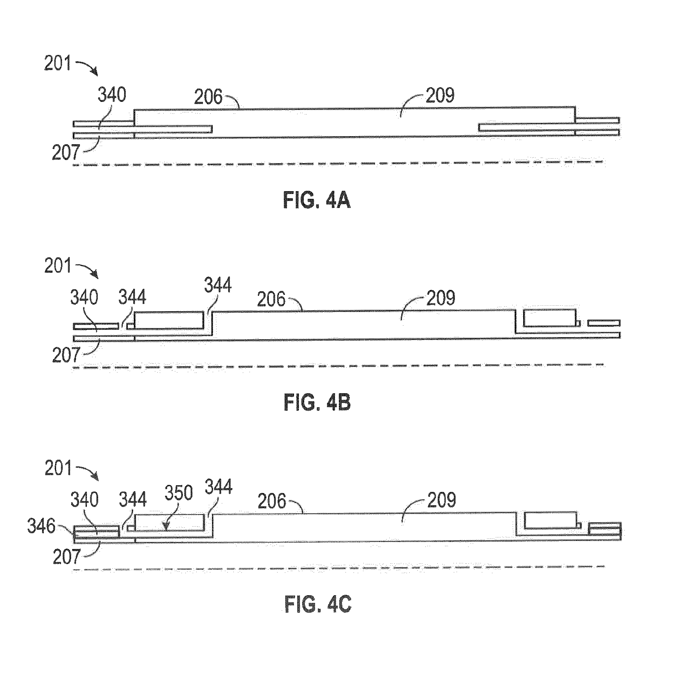

Regardless of the orientation of the rotor holes 340 and the channels 308, the rotor holes 340 form part of a rotor channel (FIGs. 4a-4c) that fluidly couples the region immediately to right of the journal bearing 242 a region immediately to the left of the first end plate 208a. Fluid then traverses the channel 308 until it reaches the second end plate 208b and is directed though another rotor channel to journal bearing 244.

FIGs. 4a-4c show how the rotor channels 350 can be formed in the rotor 201. In particular, one or more axial holes 340 are axially formed (e.g., drilled) though the rotor body extension 207 and into another portion of the rotor body 206 that shall be referred to herein as the main rotor body 209 (FIG. 4a). It shall be understood that the rotor body extension 207 and the main rotor body 209 could be formed of as a unitary piece or as two separate pieces. In one embodiment, the diameter of the main rotor body 209 is greater than the diameter of the rotor body extension 207. This process is repeated on both ends of the rotor 206.

Radial orifices 344 are formed in both the main rotor body 209 and the rotor body extension 207 such they contact the axial holes 340 (FIG. 4b). It shall be understood that the order of forming the radial orifices 344 and the axial holes 340 can be reversed without departing from the teachings herein. In one embodiment, the radial orifice 344 formed in the main rotor body 209 is located such that it will be between the end plates 208 shown in FIG. 2 when they are disposed on the rotor.

An end portion of the axial holes 340 is then filled with a plug 346 such that a rotor channel 350 is formed whereby fluid flows into the radial orifice 344 on the rotor body extension 307 through a portion of the main rotor body 209 and exits the main rotor body 209 at an outer diameter thereof. Of course, fluid could also flow in the opposite direction.

Referring again to FIG. 2, the stator 205 includes end turns 211. In one embodiment, the end turns 211. In one embodiment, a highly conductive thermal gap pad 213 is disposed between the end turns 211 and the outer housing 215 of the motor 200 to improve transfer of heat from the end turns 211 to the outer housing 215. In this and other embodiments, the thermal gap pad 213 can be formed, for example, of a high heat conductive silicone rubber.

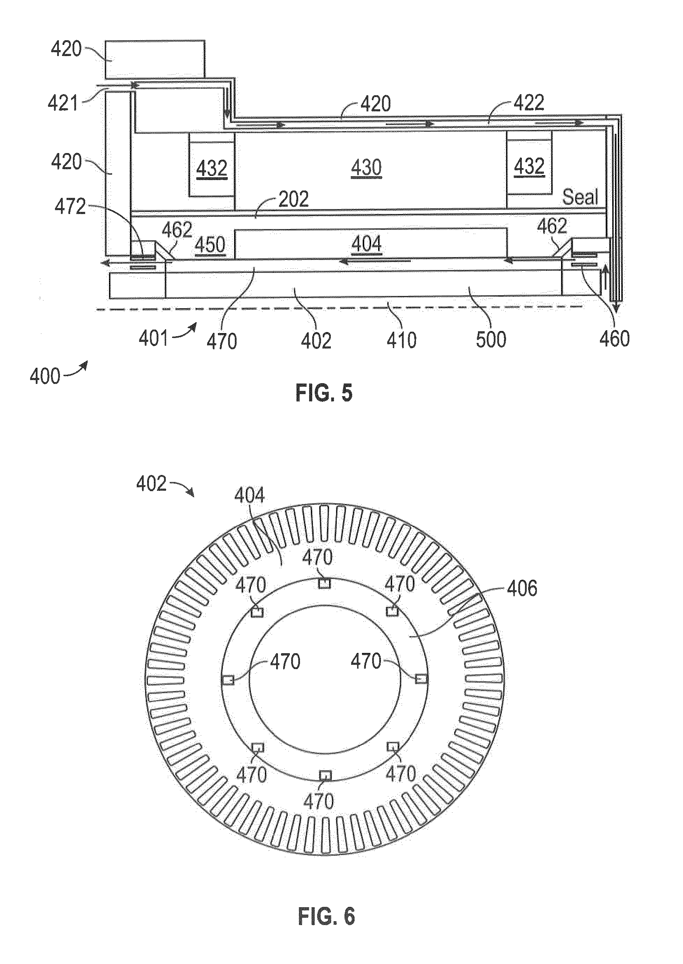

FIG. 5 shows a partial cross-section of a motor 400 according to another embodiment. In this embodiment, a cooling fluid is circulated in a manner such that it does not enter the rotor-stator gap and is driven, as described above, by an impeller (not shown). The motor shown in FIG. 5 is an induction motor. Such a motor includes a rotor 401 having a rotor shaft 402 with rotor laminations 404 disposed thereon. One of ordinary skill will realize that the laminations 404 provide a structural support for one or more rotor windings (not shown). In this embodiment, the rotor shaft 402 includes one or more channels 470 formed therein and the cooling flow (shown by the arrows in FIG. 4) is directed through these channels 470. It shall be understood that the fluid could also flow through in the inner channel 410 of the rotor but that is not required. In contrast to the prior embodiment, the channels traverse through the entire length of the main rotor body 500 and do not extend through rotor body extensions 502.

The motor 400 further includes an outer housing 420 that surrounds the stator 430. In this embodiment, a housing channel 422 or a plurality of axially or circumferentially disposed channels are provided within the outer housing 420 thrcugh which cooling fluid may flow. The cooling fluid enters the housing channel 422 through an opening 421 in the outer housing 420.

The stator 430 can include end turns 432. In one embodiment, a highly conductive thermal gap pad 434 is disposed between the end turns 432 and the outer housing 420 to improve transfer of heat from the end turns 432 to the outer housing 420. The heat is then carried at least partially away by the fluid traveling through the housing channels. 422.

As illustrated, the fluid leaves the housing channel 422 and passes through at least journal bearing 460. Seals 462 are provided around the rotor 402 to keep the fluid from entering the rotor-stator gap 450. The fluid is then forced to travel through rotor channels 470 formed in the rotor 401. As can best be seen in FIG. 6, the rotor channels 470 are formed in the main rotor body 500 of the rotor 401 radially inward from the laminations 404.

Referring again to FIG. 4, the fluid then exits the rotor 402 and re-enters the volute (not shown) by passing through journal bearing 472.

In summary, in this embodiment, liquid from pump outlet enters the motor housing channels 422 and then flows axially through these channels to the distal end of the motor 400. After passing through the journal bearing 460 at the distal end of the motor 400, the fluid is denied entry into the rotor-stator gap 450 by seals 462 and, as such, passes through rotor channels 470 and then, ultimately, back to the pump outlet. In this manner, heat from or both of stator and rotor can be carried away by the liquid.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An electric motor (200, 400) comprising:
an outer housing (215, 420);
a stator (205, 430) disposed within the outer housing; and
a rotor (201, 401) disposed within the stator (205) that, in combination with the stator, defines a rotor-stator gap (202, 450) between them, the rotor including:
a main rotor body (209, 500); and
a rotor body extension (207, 307, 502) extending axially from an end of the main rotor body (209, 500);
wherein the main rotor body (209, 500) includes an axial hole (340) formed at least partially along a length thereof.

2. The electric motor of claim 1, wherein the rotor (201, 401) includes a plurality of permanent magnets (204) disposed about the main rotor body (209, 500).

3. The electric motor of claim 2, further comprising:
two end plates (208) disposed about the main rotor body (209, 500);
wherein the magnets (204) are disposed between the two end plates (208) and the axial hole (340) extends under at one and only one of the end plates (208).

4. The electric motor of claim 3, wherein the axial hole (340) extends through the rotor body extension (207, 307, 502).

5. The electric motor of claim 4, wherein both the rotor body extension (207, 307, 502) and the main rotor body (209) include radial orifices that are in fluid communication with the axial holes (340) and form, in combination with axial holes (340), a rotor channel (350, 470) that has an entrance on the rotor body extension and an exit on the main rotor body between the end plates (208).

6. The electric motor of claim 5, wherein the plurality of permanent magnets (204) are arranged such that cooling channels (308) exist between.

7. The electric motor of claim 6, wherein the cooling channels (308) are in fluid communication with the rotor channel.

8. The electric motor of claim 7, further comprising:
a seal (462) disposed between the rotor (402) and the stator that prevent fluid from entering the rotor-stator gap (450).

9. The electric motor of claim 1, wherein the rotor (402) includes a plurality of windings formed in laminates disposed about the main rotor body (209).

10. The electric motor of claim 9, wherein the axial hole extends through an entire length of the main rotor body.

11. The electric motor of claim 9, wherein the axial hole (340) does not pass through the rotor body extension (207, 307, 502).

12. The electric motor of claim 11, further comprising:
a seal (462) disposed between the rotor (402) and the stator that prevent fluid from entering the rotor-stator gap (450).

13. The electric motor of claim 12, wherein the outer housing (215, 420) includes a fluid passage formed therein and in fluid communication with the axial hole (340).

14. The electric motor of claim 1 or 13, further comprising:
a gap pad (434) disposed between end turns (432) of the stator and the outer housing (420).

15. The electric motor of claim 13, wherein fluid flows, during operation, from a volute, through the fluid passage, into a central region of the rotor (201, 401) and back into the volute.
